# EUROPÄISCHE PATENTANMELDUNG

(11) **EP 3 438 583 A1**
(43) Veröffentlichungstag der Anmeldung: **06.02.2019**
(21) Anmeldenummer: 17020324.4
(22) Anmeldetag: 31.07.2017
(51) Int. Cl.: F25J 3/04

(54) **LUFTZERLEGUNGSANLAGE UND VERFAHREN ZUM MESSEN EINER SAUERSTOFFKONZENTRATION IN EINER LUFTZERLEGUNGSANLAGE**

(71) Anmelder: Linde Aktiengesellschaft, 80331 München (DE)
(72) Erfinder: Rainer, Flüggen, 83673 Bichl (DE); Rainer, Hoffmann, 82008 Unterhaching (DE)
(74) Vertreter: Imhof, Dietmar

(57) **Zusammenfassung**

Luftzerlegungsanlage mit einem Destillationssäulensystem, das eine Hochdrucksäule (11) und eine Niederdrucksäule (12) aufweist, wobei eine Messeinrichtung (200) zur Erfassung einer Sauerstoffkonzentration in einer sauerstoffhaltigen Umgebung (290) innerhalb der Luftzerlegungsanlage vorgesehen ist, wobei die Messeinrichtung eingerichtet ist, um eine Fluoreszenz einer in oder an der sauerstoffhaltigen Umgebung (290) bereitgestellten fluoreszierenden Komponente (230) zu erfassen.

## Beschreibung

Die Erfindung betrifft eine Luftzerlegungsanlage und ein Verfahren zum Messen einer Sauerstoffkonzentration in einer Luftzerlegungsanlage.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, inbesondere Abschnitt 2.2.5, "Cryogenic Rectification", beschrieben.

Luftzerlegungsanlagen weisen Destillationssäulensysteme auf, die beispielsweise Zwei- oder Dreisäulenanordnungen zur Bereitstellung von stickstoff- und sauerstoffreichen Luftprodukten umfassen. Typischerweise sind dabei zumindest eine sogenannte (Hoch-)Drucksäule und eine sogenannte Niederdrucksäule vorhanden. Der Betriebsdruck der Hochdrucksäule beträgt beispielsweise 4,3 bis 6,9 bar, vorzugsweise etwa 5,0 bar. Die Niederdrucksäule wird bei einem Betriebsdruck von beispielsweise 1,3 bis 1,7 bar, vorzugsweise etwa 1,5 bar betrieben. Bei den hier und im Folgenden angegebenen Druckwerten handelt es sich um Absolutdrücke im Sumpf entsprechender Säulen. Es können auch beispielsweise sogenannte Mitteldrucksäulen vorhanden sein, die bei einem Betriebsdruck betrieben werden, der zwischen den genannten Werten liegt. Insbesondere die Niederdrucksäule kann auch zweiteilig ausgebildet sein. Zu Details sei auf die Fachliteratur verwiesen.

Bei Luftzerlegungsanlagen, die z.B. zur Gewinnung von argonreichen Luftprodukten eingerichtet sind, ist außer den genannten zumindest eine weitere Destillationssäule, die sogenannte Rohargonsäule vorhanden. Typischerweise ist in entsprechenden Luftzerlegungsanlagen ferner eine sogenannte Reinargonsäule vorgesehen. (Zusätzlich oder alternativ können eine oder mehrere weitere Trennsäulen zur Stickstoff-Sauerstoff-Trennung oder zur Abtrennung weiterer Edelgase wie Krypton, Xenon, Neon oder Helium und/oder eine Reinagonsäule vorgesehen sein.)

Die Rohargonsäule, die auch als Argonanreicherungssäule bezeichnet wird, wird typischerweise mit einem Fluid aus der Niederdrucksäule gespeist, das dieser am sogenannten Argonbauch oder Argonübergang (engl. Argon Bulge) entnommen wird und überwiegend Argon und Sauerstoff, jedoch auch Restmengen an Stickstoff enthält. Der Argongehalt dieses Fluids beträgt typischerweise zwischen 5% und 15% und der Stickstoffgehalt typischerweise etwa 100 ppm. In der Rohargonsäule erfolgt eine Trennung dieses Fluids in ein argonangereichertes Gas (sogenanntes Rohargon) und eine argonabgereicherte Flüssigkeit. Das argonangereicherte Gas umfasst typischerweise etwa 1 ppm Sauerstoff und 0,5% Stickstoff. Etwa ein Drittel des argonangereicherten Gases wird der Rohargonsäule am Kopf entnommen und in die Reinargonsäule, falls vorhanden, überführt. Die argonabgereicherte Flüssigkeit wird typischerweise in die Niederdrucksäule zurückgeleitet.

Die Reinargonsäule dient hauptsächlich dazu, den in dem argonangereicherten Gas aus der Rohargonsäule enthaltenen Reststickstoff abzudestillieren. Aus dem Sumpf der Reinargonsäule kann auf diese Weise Argon mit einem Restgehalt von typischerweise etwa 1 ppm Stickstoff und 1 ppm Sauerstoff abgezogen und, ggf. nach weiterer Aufbereitung, als Produkt aus der Anlage ausgeleitet werden.

Die Rohargonsäule ist mit einem Kopfkondensator versehen, der einen Teil des in der Säule aufsteigenden argonangereicherten Gases kondensiert und damit einen flüssigen Rücklauf bereitstellt. Bei bekannten Luftzerlegungsanlagen wird der Kopfkondensator der Rohargonsäule beispielsweise mit entspanntem, sauerstoffangereichertem Fluid aus dem Sumpf der Hochdrucksäule geküht. Hierzu wird dieses in einen Verdampfungsraum des Kopfkondensators eingespeist, der vom Säuleninnenraum der Rohargonsäule getrennt ist. Die Reinargonsäule kann grundsätzlich vergleichbar ausgebildet sein.

Wie beispielsweise a.a.O., Abschnitt 2.2.5.6, "Apparatus" bzw. dem entsprechenden Unterabschnitt "Combined Evaporator/Condenser- Heat Transfer Units" erläutert, kann als Kopfkondensator einer Rohargonsäule eine kombinierte Kondensations- und Verdampfungseinheit in Form eines Badkondensators zum Einsatz kommen. Bei Badkondensatoren handelt es sich typischerweise um Sonderformen von Plattenwärmetauschern, wie sie auch als sogenannte Hauptkondensatoren zusammen mit den Destillationssäulen zur Bereitstellung der üblichen stickstoff- und sauerstoffreichen Luftprodukte verwendet werden. Bauformen und Betrieb von Badkondensatoren sind grundsätzlich bekannt.

Bei derartigen Luftzerlegungsanlagen, wobei die dargestellte Luftzerlegungsanlage zur Gewinnung von argonreichen Luftprodukten lediglich beispielhaft angeführt wurde, ist es an einer Mehrzahl von Orten innerhalb der Luftzerlegungsanlage notwendig oder wenigstens zweckmäßig, den Sauerstoffgehalt eines an dem jeweiligen Ort vorliegenden Fluids zu kennen.

Sauerstoffkonzentrationsmessungen in Luftzerlegungsanlagen werden herkömmlicherweise durch externe Analysatoren durchgeführt, wobei hier beispielsweise paramagnetische oder elektrochemische Messeffekte ausgenutzt werden. Für eine derartige Analyse mit einem externen Analysator ist es jedoch notwendig, eine Messleitung von dem entsprechenden Ort bzw. Bauteil in der Luftzerlegungsanlage zu einem hiervon entfernt bzw. extern positionierten Analysator zu führen. Dies führt zu langen Wegstrecken, womit lediglich zeitverzögerte Signale erfasst werden können. Eine derartige Messleitung von einem Ort innerhalb der Luftzerlegungsanlage zu einem externen Analysator birgt auch stets das Risiko von Leckagen, so dass auch verfälschte Signale entstehen können, da ein zu messendes Fluid, insbesondere ein zu messendes Gas, durch eine derartige Leckage in seiner Zusammensetzung verändert werden kann.

Die vorliegende Erfindung stellt sich vor diesem Hintergrund die Aufgabe, ein verbessertes Verfahren zur Erfassung einer Sauerstoffkonzentration in einer sauerstoffhaltigen Umgebung innerhalb einer Luftzerlegungsanlage zur Verfügung zu stellen.

### Offenbarung der Erfindung

Diese Aufgabe wird durch eine Luftzerlegungsanlage mit den Merkmalen des Patentanspruchs 1 und ein Verfahren zur Erfassung einer Sauerstoffkonzentration in einer sauerstoffhaltigen Umgebung einer Luftzerlegungsanlage mit den Merkmalen des Patentanspruchs 9 gelöst.

Es können eine oder mehrere Messeinrichtungen vorgesehen sein.

### Vorteile der Erfindung

Erfindungsgemäß wird eine Luftzerlegungsanlage mit einem Destillationssäulensystem, das wenigstens eine Hochdrucksäule und wenigstens eine Niederdrucksäule aufweist, vorgeschlagen, wobei wenigstens eine Messeinrichtung zur Erfassung einer Sauerstoffkonzentration in einer sauerstoffhaltigen Umgebung innerhalb der Luftzerlegungsanlage vorgesehen ist, wobei die Messeinrichtung eingerichtet ist, um eine Fluoreszenz einer in oder an der sauerstoffhaltigen Umgebung bereitgestellten fluoreszierenden Komponente zu erfassen. Hierbei wird die fluoreszierende Komponente derart ausgewählt, dass die Stärke der Fluoreszenz abhängig ist vom Sauerstoffgehalt in der sauerstoffhaltigen Umgebung. Es wird der Effekt ausgenutzt, dass die Fluoreszenz von bestimmten Substanzen von der Umgebung dieser Substanz abhängig ist. Dieser Effekt wird als Fluoreszenzlöschung bzw. quenching bezeichnet. Insbesondere wird hierbei ausgenutzt, dass die Stärke einer Fluoreszenz von bestimmten fluoreszierenden Komponenten abhängig ist von dem Sauerstoffgehalt in einer Umgebung der Komponente. Als besonders vorteilhaft erweist sich, dass während eines jeweiligen Prozesses, der in der Anlage durchgeführt wird, Sauerstoffkonzentrationen (beispielsweise in einer Säule) in situ und in Echtzeit oder wenigstens im wesentlichen in Echtzeit messen lassen. Derartige Messungen können wesentlich schneller als bei bisherigen Messverfahren, bei denen ein Analysestrom zur Messung einer Sauerstoffkonzentration aus der Anlage herausgeführt werden musste, durchgeführt werden. Beispielsweise können Totzeiten, welche bei bisherigen Messverfahren auftraten, vermieden werden. Insbesondere können erfindungsgemäß durchgeführte Messungen sehr schnell durchgeführt und online an ein Leitsystem zur Steuerung einer Anlage gegeben werden, womit eine wesentlich schnellere und somit optimierte Prozessregelung bereitstellbar ist.

Gemäß einer bevorzugten Ausführungsform der erfindungsgemäßen Luftzerlegungsanlage weist die Messeinrichtung eine Lichtquelle zur Bereitstellung von Licht zum Fluoreszenz-auslösenden Bestrahlen der fluoreszierenden Komponente und einen Sensor zum Erfassen der durch das Bestrahlen ausgelösten Fluoreszenz auf. Eine derartige Messeinrichtung ist in einfacher Weise bereitstellbar und erweist in der Praxis als sehr wartungsarm. Zudem liefert eine derartige Messeinrichtung zuverlässig präzise Messergebnisse.

Zweckmäßigerweise ist wenigstens ein Lichtwellenleiter zum Übertragen des Lichts von der Lichtquelle zu der fluoreszierenden Komponente und/oder zur Übertragung der ausgelösten Fluoreszenz von der fluoreszierenden Komponente zu dem Sensor vorgesehen. Mittels derartiger Lichtwellenleiter sind Messungen in besonders präziser Weise durchführbar. Insbesondere ermöglicht die Verwendung eines derartigen Lichtwellenleiters die Positionierung einer Auswerteeinheit in einer räumlichen Entfernung von Messort. Insbesondere kann auch ein Ende des Lichtwellenleiters als Sensor zum Erfassen der durch das Bestrahlen ausgelösten Fluoreszenz sein.

Zweckmäßigerweise ist die Lichtquelle zur Bereitstellung von Rotlicht oder Infrarotlicht ausgebildet. Eine von einem derartigen Rotlicht ausgelöste Fluoreszenz wird zweckmäßigerweise mittels eines IR-Detektors erfasst.

Gemäß einer besonders bevorzugten Ausführungsform der erfindungsgemäßen Luftzerlegungsanlage ist zwischen der fluoreszierenden Komponente einerseits und der Lichtquelle sowie dem Sensor andererseits eine transparente Wand vorgesehen. Durch diese Maßnahme kann gewährleistet werden, dass zwischen der sauerstoffhaltigen Umgebung und der Messeinrichtung eine fluiddichte Separierung zur Verfügung gestellt ist, so dass beispielsweise Leckagen, die bei Ausbildung von Messleitungen gemäß dem Stand der Technik zu Problemen führen könnten, vollständig vermieden werden können. Insbesondere kann der Lichtwellenleiter sich durch eine derartige transparente Wand hindurch erstrecken. Im Falle eines Lichtwellenleiters, der an einem Ende mit einem Sensor zum Erfassen einer Fluoreszenz ausgebildet ist, dessen Ende also insbesondere mit einem geeigneten Fluoreszenzmediem bestückt ist, kann eine derartige Wand auch nicht-transparent ausgebildet sein.

Zweckmäßigerweise weist die Luftzerlegungsanlage eine Einrichtung zur Erfassung der Temperatur in der sauerstoffhaltigen Umgebung und/oder an dem Ort oder in der Nähe der fluoreszierenden Komponente auf. Da die Fluoreszenz einer Komponente auch von der Temperatur abhängig sein kann, sind hierdurch präzisere Messergebnisse erzielbar.

Zweckmäßigerweise ist eine Auswerteeinheit zur Auswertung der Messergebnisse des Sensors und zum Berechnen der Sauerstoffkonzentration in der sauerstoffhaltigen Umgebung vorgesehen. Wie bereits erwähnt, kann eine derartige Auswerteeinheit insbesondere in einem räumlichen Abstand zu der sauerstoffhaltigen Umgebung vorgesehen sein.

Das erfindungsgemäße Verfahren zur Erfassung einer Sauerstoffkonzentration in einer sauerstoffhaltigen Umgebung einer Luftzerlegungsanlage umfasst die folgenden Schritte:
- Bereitstellen einer Komponente, die einen fluoreszierenden Stoff aufweist, in oder an der sauerstoffhaltigen Umgebung der Luftzerlegungsanlage, deren Sauerstoffkonzentration erfasst werden soll
- Bestrahlen der Komponente mit Licht zum Auslösen von Fluoreszenz,
- Erfassen der ausgelösten Frequenz mittels eines Detektors, und
- Berechnen der Sauerstoffkonzentration in der sauerstoffhaltigen Umgebung auf der Grundlage der erfassten Fluoreszenz.

Zweckmäßigerweise wird der fluoreszierende Stoff derart gewählt, dass die Fluoreszenz der Komponente mit zunehmender Sauerstoffkonzentration in der sauerstoffhaltigen Umgebung. Hierzu eignet sich insbesondere die Verwendung von Ruthenium (II)-Komplexen.

Die Erfindung wird nachfolgend unter Bezugnahme auf die beigefügte Zeichnung näher erläutert, welche eine Luftzerlegungsanlage zeigt, anhand derer die erfindungsgemäßen Maßnahmen erläutert werden.

### Kurze Beschreibung der Zeichnung

Figur 1 zeigt eine Luftzerlegungsanlage in Form eines schematischen Prozessflussdiagramms.
Figur 2 zeigt eine bevorzugte Ausführungsform einer Messeinrichtung, wie bei einer Luftzerlegungsanlage gemäß der vorliegenden Erfindung Verwendung finden kann.

### Ausführliche Beschreibung der Zeichnung

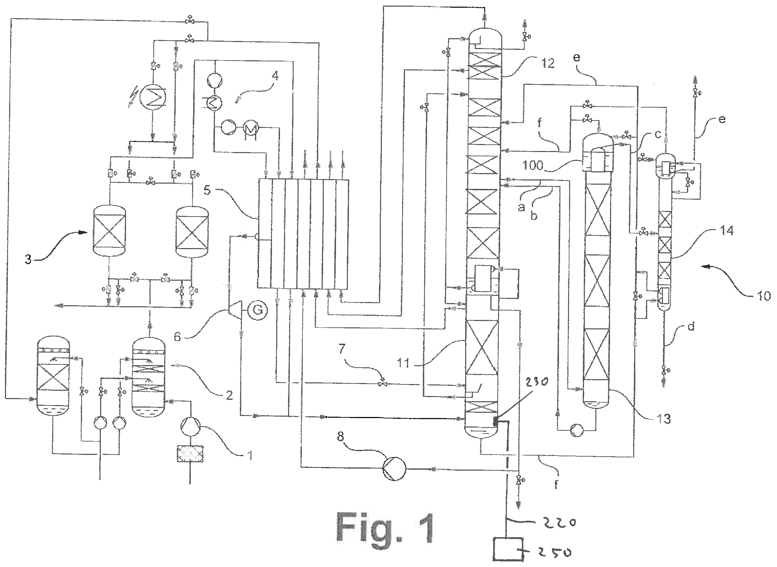

In Figur 1 ist beispielhaft eine Luftzerlegungsanlage an sich bekannter Art dargestellt.

Luftzerlegungsanlagen der gezeigten Art sind vielfach an anderer Stelle beschrieben, beispielsweise bei H.-W. Häring (Hrsg.), Industrial Gases Processing, Wiley-VCH, 2006, inbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein.

Die in Figur 1 beispielhaft gezeigte Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

Zur Gewinnung eines argonreichen Luftprodukts wird der Niederdrucksäule 12 am bekannten Argonübergang oder knapp darunter ein Strom a entnommen und in die Rohargonsäule 13 überführt. Ein im Sumpf der Rohargonsäule 13 anfallendes Kondensat wird in Form des Stroms b in die Niederdrucksäule 12 zurückgepumpt. Der Rohargonsäule 13 ist ein Kopfkondensator 100 zugeordnet, der z.B. als Badkondensator oder als Rücklaufkondensator ausgebildet sein kann.

Ein erster Anteil von in der Rohargonsäule 13 aufsteigendem argonangereichertem Gas wird in dem Kopfkondensator 100 kondensiert und gelangt als Rücklauf zurück auf die Rohargonsäule 13. Ein zweiter Anteil, der nicht im Kopfkondensator 100 kondensiert wird, wird in Form des Stroms c abgezogen und in die Reinargonsäule 14 überführt. In der Reinargonsäule 14 wird unter Verwendung eines Sumpfverdampfers und eines Kopfkondensators ein Strom d eines argonreichen Luftprodukts gewonnen. Stickstoff wird zusammen mit einem gewissen Anteil Argon aus der Reinargonsäule 14 als Strom e abgezogen und beispielsweise in die Atmosphäre abgeblasen.

Der Kopfkondensator 100 der Rohargonsäule 13 und der Kopfkondensator der Reinargonsäule 14 werden im dargestellten Beispiel mit Fluid eines Fluidstroms f als Kühlmittel gekühlt, bei dem es sich um sauerstoffangereicherte Flüssigkeit aus dem Sumpf der Hochdrucksäule 11 handelt. Dieses Fluid heizt im dargestellten Beispiel auch den Sumpf der Reinargonsäule 14.

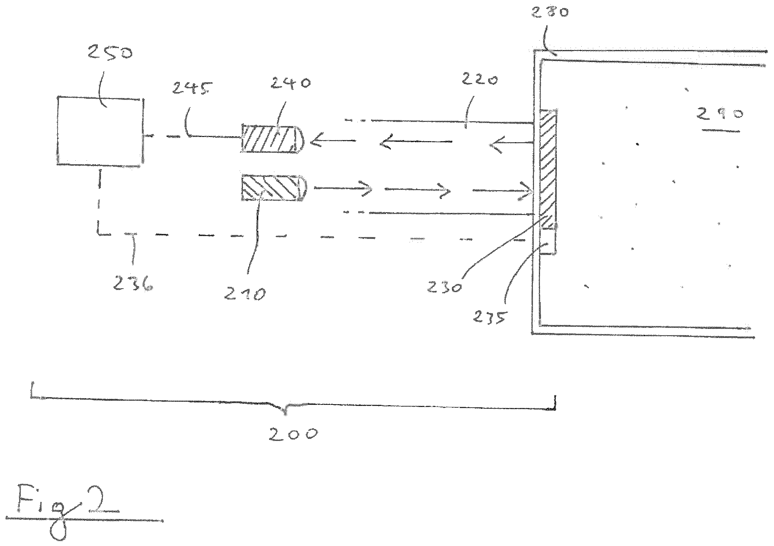

Die vorstehend beispielhaft erläuterte Luftzerlegungsanlage stellt, wie erwähnt, lediglich ein Beispiel für eine Luftzerlegungsanlage dar, welche im erfindungsgemäßen Sinne, also mit einer Messeinrichtung zur Erfassung einer Fluoreszenz zur Bestimmung eines Sauerstoffgehalts ausgerüstet werden kann. Eine derartige Messeinrichtung kann beispielsweise an den folgenden Orten der Messeinrichtung vorgesehen sein, wobei die vorliegende Aufzählung in keiner Weise als vollständig anzusehen ist:
Wesentlich ist, dass Messungen mittels der erfindungsgemäßen Messeinrichtung an üblichen Analyseorten durchgeführt werden können, wobei die Auswertung bzw. die Erfassung von Messergebnissen bevorzugt an üblichen Orten einer Anlage durchgeführt werden kann. Es ist z.B. denkbar, ein zu messendes Fluid mittels einer Leitung aus der Anlage herauszuführen und die Messung außerhalb der Anlage durchzuführen. Bevorzugt ist jedoch, diese Messung innerhalb der Anlage durchzuführen. Geignete Orte für das Vorsehen einer erfindungsgemäßen Messeinrichtung innerhalb der Anlage sind zum Beispiel ein Kopf und/oder ein Sumpf wenigstens einer der erwähnten Säulen, also beispielsweise der Hochdrucksäule 11, der Niederdrucksäule 12, der Rohargonsäule 13 oder der Reinargonsäule 14. Rein beispielshaft ist in Figur 1 eine Messeinrichtung 200 für den Sumpf der Hochdrucksäule 11 dargestellt. Bezüglich der mit Bezugszeile 220, 230 und 250 versehenen Komponenten wird auf die nachfolgende Beschreibung der Figur 2 verwiesen.

Es ist auch möglich, unterschiedliche Messeinrichtungen an unterschiedlichen Stellen innerhalb einer Säule vorzusehen, um beispielsweise den Verlauf der Sauerstoffkonzentration in vertikaler Richtung über die Säulenhöhe zu erfassen bzw. zu vermessen.

Als besonders vorteilhaft erweist sich, dass mit dem erfindungsgemässen Verfahren während eines jeweiligen Prozesses, der in der Anlage durchgeführt wird, Sauerstoffkonzentrationen (beispielsweise in einer Säule) in situ und in Echtzeit oder wenigstens im wesentlichen in Echtzeit messen lassen. Derartige Messungen können wesentlich schneller als bei bisherigen Messverfahren, bei denen ein Analysestrom zur Messung einer Sauerstoffkonzentration aus der Anlage herausgeführt werden musste, durchgeführt werden. Beispielsweise können Totzeiten, welche bei bisherigen Messverfahren auftraten, vermieden werden. Insbesondere können erfindungsgemäß durchgeführte Messungen sehr schnell durchgeführt und online an ein Leitsystem zur Steuerung einer Anlage gegeben werden, womit eine wesentlich schnellere und somit optimierte Prozessregelung bereitstellbar ist.

Eine bevorzugte Ausführungsform einer erfindungsgemäß einsetzbaren Messeinrichtung wird nun unter Bezugnahme auf Figur 2 im Einzelnen erläutert.

Eine Messeinrichtung ist in Figur 2 insgesamt mit 200 bezeichnet. Sie weist eine Rotlichtquelle 210, einen Lichtwellenleiter 220, eine fluoreszierende Komponente 230, einen Infrarot-Detektor 240 und eine Auswerteeinheit 250 auf. Die fluoreszierende Komponente 230 ist hierbei durch eine transparente Wand 280 von den übrigen Komponenten getrennt. Diese transparente Wand dient als Behälterwand für eine sauerstoffhaltige Umgebung 290 innerhalb einer Luftzerlegungsanlage, beispielsweise einer Luftzerlegungsanlage wie sie unter Bezugnahme auf Figur 1 oben erläutert wurde, deren Sauerstoffgehalt gemessen werden soll. Es sei erwähnt, dass sich der Lichtwellenleiter 220 gemäß einer alternativen Ausführungsform auch durch die Wand 280 hindurch erstrecken könnte, wobei in diesem Fall die fluoreszierende Komponente am Ende des Lichtwellenleiters ausgebildet sein kann. Mit anderen Worten, hierbei kann das Ende des Lichtwellenleiters mit einem geeigneten Fluoreszenzmedium bestückt sein. Bei dieser alternativen Ausführungsform muss die Wand auch nicht transpartent ausgebildet sein, sie kann also insbesondere lichtundurchlässig ausgebildet sein. Zwischen der Wand und dem Lichtwellenleiter besteht hierbei ein fluiddichter Kontakt.

Die Messeinrichtung 200 weist ferner einen Temperatursensor 235 auf, der ebenfalls in der sauerstoffhaltigen Umgebung 290 positioniert ist.

Der Infrarot-Detektor 240 ist über eine Signalleitung 245 mit der Auswerteeinheit 250 vebunden. Der Temperatursensor 235 ist gemäß der dargestellten Ausführungsform über eine drahtlose Verbindung 236 (gestrichelt dargestellt) mit der Auswerteeinheit 250 verbunden. Selbstverständlich ist es auch denkbar, eine verdrahtete Verbindung 236 vorzusehen.

Die Infrarot-Lichtquelle 210 emittiert Infrarotlicht, welches über den Lichtwellenleiter 220 und die transparente Wand 280 auf die fluoreszierende Komponente 230 abgestrahlt wird. Die hierdurch ausgelöste Fluoreszenz der fluoreszierenden Komponente 230 wird durch die transparente Wand 280 hindurch auf den Lichtwellenleiter 220 und schließlich auf den Infrarot-Detektor übertragen. Der Infrarot-Detektor 240 erfasst die Fluoreszenz und sendet ein entsprechendes Signal über die Leitung 245 an die Auswerteeinheit 250. Die Auswerteeinheit 250 berechnet aus der erfassten Fluoreszenz sowie der durch den Temperatursensor 235 erfassten Temperatur in der sauerstoffhaltigen Umgebung 290 den Sauerstoffgehalt in der sauerstoffhaltigen Umgebung 290.

Wie bereits erläutert, ist die Fluoreszenz der fluoreszierenden Komponente 230 im Wesentlichen abhängig von dem Sauerstoffgehalt in der sauerstoffhaltigen Umgebung 290. Je nach Sauerstoffgehalt in der sauerstoffhaltigen Umgebung 290 lagern sich z.B. Sauerstoffmoleküle in der fluoreszierenden Komponente 230 an, so dass der Sauerstoffgehalt in der sauerstoffhaltigen Umgebung 290 unmittelbar den Sauerstoffgehalt innerhalb der fluoreszierenden Komponente 230 beeinflusst. Der Sauerstoffgehalt der fluoreszierenden Komponente beeinflusst die tatsächliche, durch das Infrarotlicht ausgelöste Fluoreszenz der fluoreszierenden Komponente 230. Insbesondere unter Berücksichtigung der durch die Sensoreinrichtung 235 erfassten Temperatur lässt sich somit aus der Messung der Fluoreszenz der fluoreszierenden Komponente 230 auf den Sauerstoffgehalt der sauerstoffhaltigen Umgebung 290 rückschließen.

Die erfindungsgemäße Luftzerlegungsanlage bzw. das erfindungsgemäße Verfahren erlaubt eine schnelle präzise und zuverlässige Messung von Sauerstoffkonzentrationen in sauerstoffhaltigen Umgebungen innerhalb einer Luftzerlegungsanlage ohne lange Totzeiten aufgrund langer Analysenleitungen, wie diese beim Stand der Technik vorgesehen waren. Dies erlaubt entsprechend schnelle Regelschleifen, insbesondere im Falle von Veränderungen des Anlagenzustands. Außerdem kann die Gefahr von Leckagen in der Messleitung vollständig vermieden werden.

## Patentansprüche

1. Luftzerlegungsanlage mit einem Destillationssäulensystem, das eine Hochdrucksäule (11) und eine Niederdrucksäule (12) aufweist, wobei eine Messeinrichtung (200) zur Erfassung einer Sauerstoffkonzentration in einer sauerstoffhaltigen Umgebung (290) innerhalb der Luftzerlegungsanlage vorgesehen ist, wobei die Messeinrichtung (200) eingerichtet ist, um eine Fluoreszenz einer in oder an der sauerstoffhaltigen Umgebung (290) bereitgestellten fluoreszierenden Komponente (230) zu erfassen.

2. Luftzerlegungsanlage nach Anspruch 1, bei der die Messeinrichtung (200) eine Lichtquelle (210) zur Bereitstellung von Licht zum Fluoreszenz-auslösenden Bestrahlen der fluoreszierenden Komponente (230) und einen Sensor (240) zum Erfassen der durch das Bestrahlen ausgelösten Fluoreszenz aufweist.

3. Luftzerlegungsanlage nach Anspruch 2, mit wenigstens einem Lichtwellenleiter (220) zum Übertragen des Lichts von der Lichtquelle (210) zu der fluoreszierenden Komponente (230) und/oder zur Übertragung der ausgelösten Fluoreszenz von der fluoreszierenden Komponente (230) zu dem Sensor (240).

4. Luftzerlegungsanlage nach einem der Anspüche 2 oder 3, bei der die Lichtquelle (210) zur Bereitstellung von Rotlicht oder Infrarotlicht ausgebildet ist.

5. Lichtzerlegungsanlage nach einem der vorstehenden Ansprüche 2 bis 4, bei der der Sensor (240) als Infrarot-Sensor ausgebildet ist.

6. Lichtzerlegungsanlage nach einem der vorstehenden Ansprüche 2 bis 5, bei der zwischen der fluoreszierenden Komponente (230) einerseits und der Lichtquelle (210) sowie dem Sensor (240) andererseits eine transparente Wand (280) vorgesehen ist.

7. Luftzerlegungsanlage nach einem der vorstehenden Ansprüche, ferner mit einer Einrichtung (235) zur Erfassung der Temperatur in der sauerstoffhaltigen Umgebung (290) und/oder am Ort oder in der Nähe der fluoreszierenden Komponente (230).

8. Luftzerlegungsanlage nach einem der vorstehenden Ansprüche 2 bis 7, **gekennzeichnet durch** eine Auswerteeinheit (250) zur Auswertung der Messergebnisse des Sensors (240) und zum Berechnen der Sauerstoffkonzentration in der sauerstoffhaltigen Umgebung (290).

9. Verfahren zur Erfassung einer Sauerstoffkonzentration in einer sauerstoffhaltigen Umgebung einer Luftzerlegungsanlage mit folgenden Schritten:
- Bereitstellen einer Komponente, die einen fluoreszierenden Stoff aufweist, in oder an der sauerstoffhaltigen Umgebung der Luftzerlegungsanlage, deren Sauerstoffkonzentration erfasst werden soll,
- Betrahlen der Komponente mit Licht zum Auslösen von Fluoreszenz,
- Erfassen der ausgelösten Fluoreszenz mittels eines Detektors, und
- Berechnen der Sauerstoffkonzentration in der sauerstoffhaltigen Umgebung auf der Grundlage der erfassten Fluoreszenz.

10. Verfahren nach Anspruch 9, bei dem der fluoreszierende Stoff derart gewählt ist, dass die Fluoreszenz der Komponente mit zunehmender Sauerstoffkonzentration in der sauerstoffhaltigen Umgebung abnimmt.

11. Verfahren nach einem der Ansprüche 10 oder 11, bei dem in oder an der sauerstoffhaltigen Umgebung und/oder in der Umgebung oder an der Komponente eine Temperatur erfasst wird.

12. Verfahren nach einem der Ansprüche 10 oder 11, das in einer Luftzerlegungsanlage nach einem der vorstehenden Ansprüche 1 bis 8 durchgeführt wird.
